# EUROPEAN PATENT SPECIFICATION

(11) **EP 3 112 980 B1**
(45) Date of publication and mention of the grant of the patent: **22.08.2018**
(21) Application number: 16162346.7
(22) Date of filing: 24.03.2016
(51) Int. Cl.: G06F 1/32

(54) **CIRCUIT, METHOD AND DEVICE FOR WAKING UP MASTER MCU**
SCHALTUNG, VERFAHREN UND VORRICHTUNG ZUM AUFWECKEN EINER MASTER-MIKRO-STEUEREINHEIT (MCU)
CIRCUIT, PROCÉDÉ ET DISPOSITIF POUR RÉVEILLER UNE MCU MAÎTRE

(30) Priority: 29.06.2015 CN 201510370154
(43) Date of publication of application: 04.01.2017
(73) Proprietor: Xiaomi Inc., Beijing 100085 (CN)
(72) Inventor: MENG, Deguo, Haidian District Beijing 100085 (CN); DING, Yi, Haidian District Beijing 100085 (CN); HOU, Enxing, Haidian District Beijing 100085 (CN)
(74) Representative: Reeve, Nicholas Edward

(56) References cited:
- US-A1- 2005 132 096
- US-A1- 2006 259 642
- US-A1- 2007 198 870
- US-A1- 2013 212 408
- US-A1- 2014 237 278

## Description

### FIELD

The present disclosure relates to a device technology field, and more particularly to a circuit, a method and a device for waking up a master MCU.

### BACKGROUND

In the developing of embedded system software, developers will switch the system to a low power consumption mode at idle, so as to reduce power consumption and save energy, in which a Microcontroller Unit (MCU) chip will enter a sleep state or a deep sleep state. In the deep sleep state, common peripherals of the MCU (such as a Serial Peripheral Interface SPI, a Universal Asynchronous Receiving Transmission UART, and an analog/digital A/D converter unit) may not work normally, and other chips may not communicate with the MCU via the serial interface. Only an external interrupt and a timer interrupt can wake up the MCU.

In another scenario, an intelligent device system may enter the low power consumption mode at idle, so as to reduce power consumption and prompt energy efficiency. The MCU may enter a sleep mode or a deep sleep (standby/hibernate) mode. When the MCU enters the deep sleep mode, a master clock will stop working, and some inner peripherals (e.g. a UART unit, a SPI unit, an Inter-Integrated Circuit bus I2C unit, an A/D unit, and a Pulse Width Modulation PWM unit, etc.) may not be able to work if depending on the master clock. Thus, the master MCU may not receive data sent from the UART unit, the SPI unit, the I2C unit and etc. in time.

US2013/0212408 discloses a method of communicating in an electronic system or apparatus. The method includes regulating a clock frequency of the peripheral, where the regulation is based at least in part on the power state of the processor.

US2005/1032096 discloses a method, apparatus and computer program wherein interrupt thresholds are automatically adjusted based on the current state of the processor.

US2006/0259642 discusses a computer system adapted to play audio files. The power of the computer system is turned on and the computer system plays the plurality of compressed audio files in the audio playback mode when the external digital media device is in communication with the interface unit.

US2014/0237278 discloses systems and methods of enabling power management in a micro server including providing multiple cores, a power management module coupled to the cores, and one or more peripherals coupled to the power management module.

US2007/0198870 discloses a multi-processor system comprising a clock generator, a clock controller, a main processor, a plurality of co-processors and an interrupt control interface.

We have appreciated that it would be desirable to provide a circuit, a method and a device for waking up a master MCU, such that the master MCU in a deep sleep state may be woken up in time for sending and receiving data.

### SUMMARY OF THE INVENTION

The invention is defined in the appended independent claims. Particularly advantageous embodiments of the invention are defined in the appended dependent claims. A circuit for waking up a master MCU is defined in independent claim 1.

In an embodiment, sending by the peripheral interface chip a wakeup signal to the master MCU includes: sending by the peripheral interface chip the wakeup signal in a form of interrupt signal to the master MCU.

In an embodiment, the peripheral interface chip and the peripheral processing chip remaining in a normal working state includes: transmitting data between the peripheral processing chip and the peripheral interface chip via Direct Memory Access DMA.

In an embodiment, the peripheral interface chip is a Universal Asynchronous Receiver Transmitter UART unit, a Serial Peripheral Interface SPI unit, an Inter-Integrated Circuit bus I2C unit, or a Bluetooth unit; the peripheral processing chip is an Analog/Digital A/D unit, a Pulse Width Modulation PWM unit, a video processing unit, or an audio processing unit.

A method for waking up a master Microcontroller Unit MCU is further defined in independent claim 4.

In an embodiment, sending a wakeup signal to the master MCU includes: sending the wakeup signal in a form of interrupt signal to the master MCU.

In an embodiment, configuring the peripheral interface chip and the peripheral processing chip to be in a normal working state includes: configuring the peripheral processing chip and the peripheral interface chip to transmit data between each other via Direct Memory Access DMA.

In an embodiment, the peripheral interface chip is a Universal Asynchronous Receiver Transmitter UART unit, a Serial Peripheral Interface SPI unit, an Inter-Integrated Circuit bus I2C unit, or a Bluetooth unit; the peripheral processing chip is an Analog/Digital A/D unit, a Pulse Width Modulation PWM unit, a video processing unit, or an audio processing unit.

A computer program for performing the above method is also contemplated by the invention.

The technical solutions provided in the present disclosure may include the following beneficial effects.

In above embodiments, the clock line of the master MCU is connected with a master clock signal, and each of the clock line of the peripheral processing chip and a clock line of the peripheral interface chip is connected with a slave clock signal, i.e., the clock lines of the master MCU, the peripheral processing chip and the peripheral interface chip are connected with independent clock signals, such that the peripheral interface chip and the peripheral processing chip may remain in a normal working state when the master MCU enters a deep sleep state. Thus, if the data amount of the data sent from the peripheral processing chip to the peripheral interface chip exceeds the threshold, the peripheral interface chip may send the wakeup signal to the master MCU, and the master MCU may send, receive and process data after being woken up. In this way, the master MCU in the deep sleep state may be woken up in time for sending, receiving and processing data.

It should be understood that, the above general description and following detail description are exemplary and explanatory, and shall not be construed to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of a circuit for waking up a master MCU according to an exemplary embodiment.
Fig. 2 is a flow chart of a method for waking up a master MCU according to an exemplary embodiment.
Fig. 3 is a flow chart of step S201 in a method for waking up a master MCU according to an exemplary embodiment.
Fig. 4 is a block diagram of a device for waking up a master MCU according to an exemplary embodiment.
Fig. 5 is a block diagram of a configuring module in a device for waking up a master MCU according to an exemplary embodiment.
Fig. 6 is a schematic diagram of a device for waking up a master MCU according to an exemplary embodiment.

### DETAILED DESCRIPTION

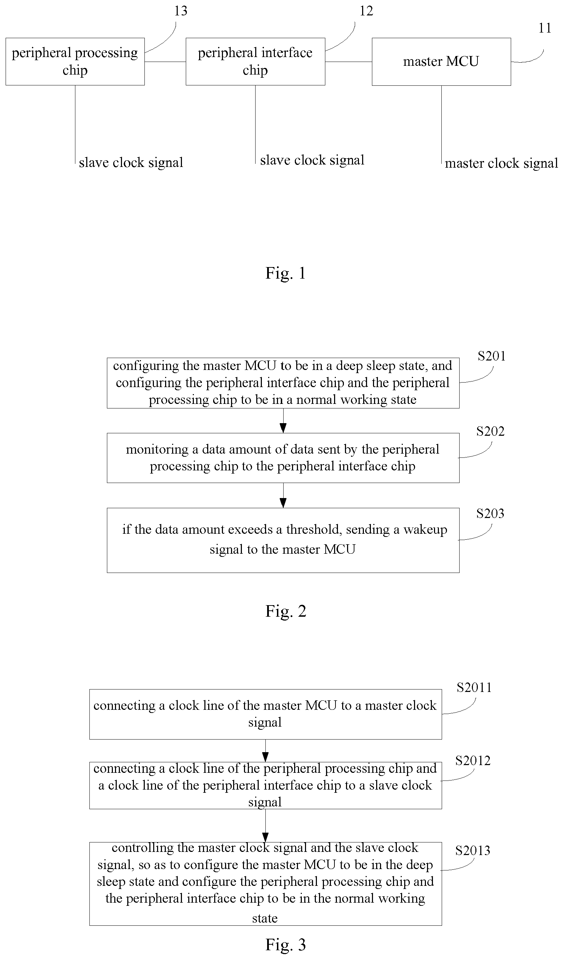

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Fig. 1 is a schematic diagram of a circuit for waking up a master MCU according to an exemplary embodiment. The circuit includes the master MCU 11, a peripheral interface chip 12, and a peripheral processing chip 13.

The peripheral processing chip 13 is connected with the master MCU 11 via the peripheral interface chip 12.

A clock line of the master MCU 11 is connected with a master clock signal, and each of a clock line of the peripheral processing chip 13 and a clock line of the peripheral interface chip 12 is connected with a slave clock signal, such that the peripheral interface chip 12 and the peripheral processing chip 13 remain in a normal working state when the master MCU enters a deep sleep state. The peripheral interface chip 12 is configured to monitor a data amount of data sent by the peripheral processing chip 13 to the peripheral interface chip 12, and to send a wakeup signal to the master MCU 11 if the data amount exceeds a threshold.

In the above embodiment, the clock line of the master MCU 11 is connected to receive a master clock signal, each of the clock line of the peripheral processing chip 13 and the clock line of the peripheral interface chip 12 is connected to receive a slave clock signal, i.e., the clock lines of the master MCU 11, the peripheral processing chip 13 and the peripheral interface chip 12 are connected to different clock signals, such that the peripheral interface chip 12 and the peripheral processing chip 13 may remain in a normal working state when the master MCU 11 enters a deep sleep state. Thus, if the data amount of the data sent from the peripheral processing chip 13 to the peripheral interface chip 12 exceeds the threshold, the peripheral interface chip 12 may send the wakeup signal to the master MCU 11, and then the master MCU may send, receive and process data after being woken up. In this way, the master MCU in the deep sleep state may be woken up in time for sending, receiving and processing data.

In the above embodiment, a buffer is disposed in the peripheral interface chip. The peripheral processing chip prepares data to be sent to the master MCU via the peripheral interface chip, and sends data to the peripheral interface chip, which stores the data in the buffer and sends the wakeup signal to the master MCU if the data amount exceeds the threshold.

In an embodiment, the peripheral interface chip sends the wakeup signal in a form of interrupt signal to the master MCU, such that it is possible to wake up the master MCU 11 in the deep sleep state in time for sending and receiving data. Specifically, the peripheral interface chip monitors the data amount of data sent by the peripheral processing chip to the peripheral interface chip, generates the interrupt signal if the data amount exceeds the threshold, and sends the interrupt signal to the master MCU, thus waking up the master MCU.

In an embodiment, the peripheral processing chip and the peripheral interface chip may transmit data between each other via Direct Memory Access DMA, which is a high speed data transfer operation, allowing a direct data reading and writing between an external device and the memory, without via a CPU and intervening by the CPU, and totally controlled by a DMA controller, such that data may be transmitted between the peripheral processing chip and the peripheral interface chip even if the master MCU is in the deep sleep state.

In an embodiment, the peripheral interface chip may be a Universal Asynchronous Receiver Transmitter UART unit, a Serial Peripheral Interface SPI unit, an Inter-Integrated Circuit bus I2C unit, or a Bluetooth unit; the peripheral processing chip may be an Analog/Digital A/D unit, a Pulse Width Modulation PWM unit, a video processing unit, or an audio processing unit.

In the following, an application example of the present disclosure is described, in which the peripheral interface chip is configured as the UART unit, and the peripheral processing chip is configured as the A/D unit.

The application example is a low power consumption circuit applied in an intelligent device, a master MCU of which may be woken up in time from the deep sleep state for receiving and sending data. The low consumption circuit is an internal peripheral structure independent of a master clock, in which the internal peripheral UART unit and A/D unit have their own work clocks independent of the master clock. Thus, if the master MCU enters the deep sleep mode, a working state of a certain peripheral may be configured separately. For example, the UART unit remains in a normal working state when the master MCU enters a deep sleep state, and transmit data with the A/D unit via DMA. The UART unit will wake up the master MCU by sending the interrupt signal, if a data amount of data sent by the A/D unit via the UART unit exceeds a threshold, such that the master MCU may receive, send and process data. In this way, it may ensure that the device still can receive data normally in an ultra low power consumption mode.

Fig. 2 is a flow chart of a method for waking up a master MCU according to an exemplary embodiment, and as shown in Fig. 2, the method is applied in an apparatus including the master MCU, a peripheral interface chip, and a peripheral processing chip, and includes following steps S201 ∼ S203.

In step S201, the master MCU is configured to be in a deep sleep state, and the peripheral interface chip and the peripheral processing chip are configured to be in a normal working state.

In step S202, a data amount of data sent by the peripheral processing chip to the peripheral interface chip is monitored.

In step S203, if the data amount exceeds a threshold, a wakeup signal is sent to the master MCU. The wakeup signal may be sent to the master MCU in a form of interrupt.

In the above embodiment, the master MCU is configured to be in the deep sleep mode, the peripheral interface chip and the peripheral processing chip are configured to be in the normal working state, and a wakeup signal is sent to the master MCU if the data amount of data sent from the peripheral processing chip to the peripheral interface chip exceeds the threshold. In this way, the master MCU may be woken up in time from the deep sleep state, for receiving and sending data.

In an embodiment, the peripheral interface chip may be a Universal Asynchronous Receiver Transmitter UART unit, a Serial Peripheral Interface SPI unit, an Inter-Integrated Circuit bus I2C unit, or a Bluetooth unit; the peripheral processing chip may be an Analog/Digital A/D unit, a Pulse Width Modulation PWM unit, a video processing unit, or an audio processing unit.

Step S201 includes configuring the peripheral processing chip and the peripheral interface chip to transmit data between each other via Direct Memory Access DMA, which is a high speed data transfer operation, allowing a direct data reading and writing between an external device and the memory, without via a CPU and intervening by the CPU, and totally controlled by a DMA controller, such that data transmission still may be performed between the peripheral processing chip and the peripheral interface chip when the master MCU is in the deep sleep state.

As shown in Fig. 3, step S201 includes following steps.

In step S201 1, a clock line of the master MCU is connected to a master clock signal.

In step S2012, each of a clock line of the peripheral processing chip and a clock line of the peripheral interface chip is connected to a slave clock signal.

In step S2013, the master clock signal and the slave clock signal are controlled, so as to configure the master MCU to be in the deep sleep state and configure the peripheral processing chip and the peripheral interface chip to be in the normal working state.

In the above embodiment, the clock line of the master MCU is connected with a master clock signal, each of the clock line of the peripheral processing chip and the clock line of the peripheral interface chip is connected with a slave clock signal, i.e., the clock lines of the master MCU, the peripheral processing chip and the peripheral interface chip are connected with different clock signals, such that the peripheral interface chip and the peripheral processing chip may remain in a normal working state when the master MCU enters a deep sleep state.

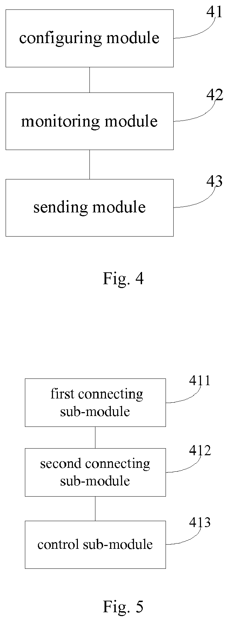

Fig. 4 is a block diagram of a device for waking up a master MCU according to an exemplary embodiment, and as shown in Fig. 4, the device is applied in an apparatus including the master MCU, a peripheral interface chip, and a peripheral processing chip, and includes a configuring module 41, a monitoring module 42 and a sending module 43.

The configuring module 41 is configured to configure the master MCU to be in a deep sleep state, and configure the peripheral interface chip and the peripheral processing chip to be in a normal working state.

The monitoring module 42 is configured to monitor a data amount of data sent by the peripheral processing chip to the peripheral interface chip.

The sending module 43 is configured to send a wakeup signal to the master MCU if the data amount exceeds a threshold.

In the above embodiment, the master MCU is configured to be in the deep sleep mode, the peripheral interface chip and the peripheral processing chip are configured to be in a normal working state, and a wakeup signal is sent to the master MCU if the data amount of data sent from the peripheral processing chip to the peripheral interface chip exceeds threshold. In this way, the master MCU of the apparatus may be woken up in time from the deep sleep state, for receiving and sending data.

In an embodiment, the configuring module 41 is configured to configure the peripheral processing chip and the peripheral interface chip to transmit data between each other via Direct Memory Access DMA, which is a high speed data transfer operation, allowing a direct data reading and writing between an external device and the memory, without via a CPU and intervening by the CPU, and totally controlled by a DMA controller, such that data still may be transmitted between the peripheral processing chip and the peripheral interface chip when the master MCU is in the deep sleep state.

As shown in Fig. 5, the configuring module 41 includes a first connecting sub-module 411, a second connecting sub-module 412 and a control sub-module 413.

The first connecting sub-module 411 is configured to connect a clock line of the master MCU to a master clock signal.

The second connecting sub-module 412 is configured to connect each of a clock line of the peripheral processing chip and a clock line of the peripheral interface chip to a slave clock signal.

The control sub-module 413 is configured to control the master clock signal and the slave clock signal, so as to configure the master MCU to be in the deep sleep state and configure the peripheral processing chip and the peripheral interface chip to be in the normal working state.

In the above embodiment, the clock line of the master MCU is connected with a master clock signal, each of the clock line of the peripheral processing chip and the clock line of the peripheral interface chip is connected with a slave clock signal, i.e., the clock lines of the master MCU, the peripheral processing chip and the peripheral interface chip are connected with different clock signals, such that the peripheral interface chip and the peripheral processing chip may remain in a normal working state when the master MCU enters a deep sleep state.

The peripheral interface chip may be a Universal Asynchronous Receiver Transmitter UART unit, a Serial Peripheral Interface SPI unit, an Inter-Integrated Circuit bus I2C unit, or a Bluetooth unit.

The peripheral processing chip may be an Analog/Digital A/D unit, a Pulse Width Modulation PWM unit, a video processing unit, or an audio processing unit.

With respect to the devices in the above embodiments, the specific operation modes of individual modules therein have been described in detail in the embodiments regarding the methods for waking up a master MCU, which will not be elaborated herein.

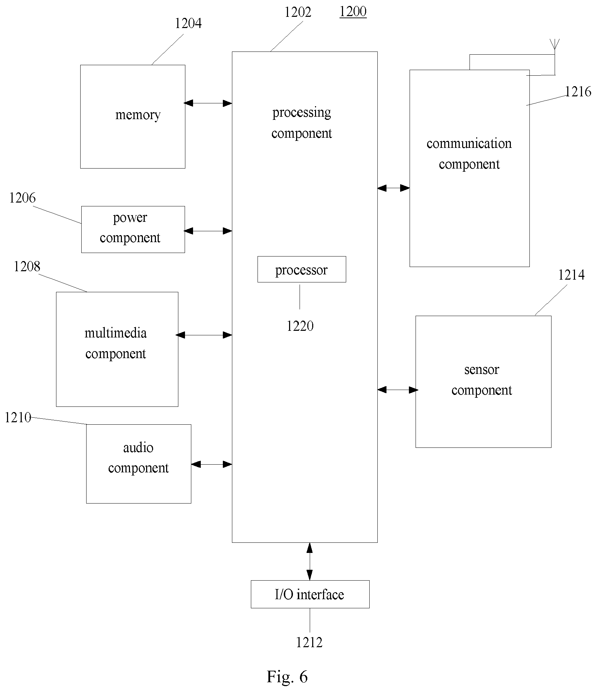

Fig. 6 is a schematic diagram of a device 1200 for waking a master MCU according to an exemplary embodiment. The device is applicable to a mobile terminal. For example, the device 1200 may be a mobile phone, a computer, a digital broadcasting terminal, a messaging device, a game console, a tablet device, fitness equipment, a Personal Digital Assistant PDA, etc.

Referring to Fig. 6, the device 1200 may include the following one or more components: a processing component 1202, a memory 1204, a power component 1206, a multimedia component 1208, an audio component 1210, an Input/Output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1208 includes a front camera and/or a rear camera. The front camera and the rear camera may receive external multimedia data while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the intelligent device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface for the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200 and relative positioning of components (e.g. the display and the keypad of the device 1200). The sensor component 1214 may also detect a change in position of the device 1200 or of a component in the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate wired or wireless communication between the device 1200 and other devices. The device 1200 can access a wireless network based on a communication standard, such as WIFI, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1204 including instructions. The above instructions are executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

An exemplary embodiment defines a device for waking up a master Microcontroller Unit MCU, including: a processor; and a memory, configured to store instructions executable by the processor; wherein, the processor is configured to: configure the master MCU to be in a deep sleep state, and configure a peripheral interface chip and a peripheral processing chip to be in a normal working state; monitor a data amount of data sent by the peripheral processing chip to the peripheral interface chip; and send a wakeup signal to the master MCU if the data amount exceeds a threshold.

In an embodiment, the processor is further configured as follows. Sending a wakeup signal to the master MCU includes: sending the wakeup signal in a form of interrupt signal to the master MCU.

In an embodiment, the processor is further configured as follows. Configuring the master MCU to be in a deep sleep state, and configuring the peripheral interface chip and the peripheral processing chip to be in a normal working state, includes: connecting a clock line of the master MCU to a master clock signal; connecting each of a clock line of the peripheral processing chip and a clock line of the peripheral interface chip to a slave clock signal; and controlling the master clock signal and the slave clock signal, so as to configure the master MCU to be in the deep sleep state and configure the peripheral processing chip and the peripheral interface chip to be in the normal working state.

In an embodiment, the processor is further configured as follows. Configuring the peripheral interface chip and the peripheral processing chip to be in a normal working state includes: configuring the peripheral processing chip and the peripheral interface chip to transmit data between each other via Direct Memory Access DMA.

In an embodiment, the processor is further configured as follows. The peripheral interface chip is a Universal Asynchronous Receiver Transmitter UART unit, a Serial Peripheral Interface SPI unit, an Inter-Integrated Circuit bus I2C unit, or a Bluetooth unit; the peripheral processing chip is an Analog/Digital A/D unit, a Pulse Width Modulation PWM unit, a video processing unit, or an audio processing unit.

A non-transitory computer-readable storage medium having stored therein instructions that, when executed by a processor of a mobile terminal, causes the mobile terminal to perform a method for waking up a master MCU. The method includes: configuring the master MCU to be in a deep sleep state, and configuring the peripheral interface chip and the peripheral processing chip to be in a normal working state; monitoring a data amount of data sent by the peripheral processing chip to the peripheral interface chip; if the data amount exceeds a threshold, sending a wakeup signal to the master MCU.

In an embodiment, sending a wakeup signal to the master MCU includes:
sending the wakeup signal in a form of interrupt signal to the master MCU.

In an embodiment, configuring the master MCU to be in a deep sleep state and configuring the peripheral interface chip and the peripheral processing chip to be in a normal working state includes: connecting a clock line of the master MCU to a master clock signal;connecting each of a clock line of the peripheral processing chip and a clock line of the peripheral interface chip to a slave clock signal; and controlling the master clock signal and the slave clock signal, so as to configure the master MCU to be in the deep sleep state and configure the peripheral processing chip and the peripheral interface chip to be in the normal working state.

In an embodiment, configuring the peripheral interface chip and the peripheral processing chip to be in a normal working state includes: configuring the peripheral processing chip and the peripheral interface chip to transmit data between each other via Direct Memory Access DMA.

In an embodiment, the peripheral interface chip is a Universal Asynchronous Receiver Transmitter UART unit, a Serial Peripheral Interface SPI unit, an Inter-Integrated Circuit bus I2C unit, or a Bluetooth unit; the peripheral processing chip is an Analog/Digital A/D unit, a Pulse Width Modulation PWM unit, a video processing unit, or an audio processing unit.

## Claims

1. A circuit for waking up a master Microcontroller Unit MCU (11), comprising the master MCU (11), a peripheral interface chip (12), and a peripheral processing chip (13), wherein
the peripheral processing chip (13) is connected with the master MCU (11) via the peripheral interface chip (12);
a clock line of the master MCU (11) is connected with a master clock signal, and each of a clock line of the peripheral processing chip (13) and a clock line of the peripheral interface chip (12) is connected with a slave clock signal, the slave clock signal is independent of the master clock signal, such that the peripheral interface chip (12) and the peripheral processing chip (13) remain in a normal working state when the master MCU (11) enters a deep sleep state in which the master clock stops working wherein the peripheral interface chip (12) and the peripheral processing chip (13) when configured to remain in a normal working state transmit data between the peripheral processing chip (13) and the peripheral interface chip (12) via Direct Memory Access DMA; and
the peripheral interface chip (12) is configured to monitor a data amount of data sent by the peripheral processing chip (13) to the peripheral interface chip (12), and to send a wakeup signal to the master MCU (11) if the data amount exceeds a threshold.

2. The circuit according to claim 1, wherein sending by the peripheral interface chip (12) a wakeup signal to the master MCU (11) comprises:
sending by the peripheral interface chip (12) the wakeup signal in a form of interrupt signal to the master MCU (11).

3. The circuit according to any preceding claim, wherein the peripheral interface chip (12) is a Universal Asynchronous Receiver Transmitter UART unit, a Serial Peripheral Interface SPI unit, an Inter-Integrated Circuit bus I2C unit, or a Bluetooth unit; and
the peripheral processing chip (13) is an Analog/Digital A/D unit, a Pulse Width Modulation PWM unit, a video processing unit, or an audio processing unit.

4. A method for waking up a master Microcontroller Unit MCU (11), applied in an apparatus comprising a master MCU (11), a peripheral interface chip (12) and a peripheral processing chip (13), and comprising:
configuring the master MCU (11) to be in a deep sleep state, and configuring the peripheral interface chip (12) and the peripheral processing chip (13) to be in a normal working state comprising: transmitting data between the peripheral processing chip (13) and the peripheral interface chip (12) via Direct Memory Access DMA;
monitoring a data amount of data sent by the peripheral processing chip (13) to the peripheral interface chip (12); and
if the data amount exceeds a threshold, sending a wakeup signal to the master MCU (11);
wherein configuring the master MCU (11) to be in a deep sleep state and configuring the peripheral interface chip (12) and the peripheral processing chip (13) to be in a normal working state comprises:
connecting a clock line of the master MCU (11) to a master clock signal;
connecting each of a clock line of the peripheral processing chip (13) and a clock line of the peripheral interface chip (12) to a slave clock signal, the slave clock signal being independent of the master clock signal; and
controlling the master clock signal and the slave clock signal, so as to configure the master MCU (11) to be in the deep sleep state in which the master clock stops working and configure the peripheral processing chip (13) and the peripheral interface chip (12) to be in the normal working state.

5. The method according to claim 5, wherein sending a wakeup signal to the master MCU (11), comprises:
sending the wakeup signal in a form of interrupt signal to the master MCU (11).

6. The method according to claim 4 or claim 5, wherein
the peripheral interface chip (12) is a Universal Asynchronous Receiver Transmitter UART unit, a Serial Peripheral Interface SPI unit, an Inter-Integrated Circuit bus I2C unit, or a Bluetooth unit; and
the peripheral processing chip (13) is an Analog/Digital A/D unit, a Pulse Width Modulation PWM unit, a video processing unit, or an audio processing unit.

## Patentansprüche

1. Schaltung zum Aufwecken einer Master-Mikrocontrollereinheit (MCU) (11), umfassend die Master-MCU (11), einen peripheren Schnittstellen-Chip (12) und einen peripheren Verarbeitungs-Chip (13), wobei
der periphere Verarbeitungschip (13) über den peripheren Schnittstellen-Chip (12) mit der Master-MCU (11) verbunden ist;
eine Taktleitung der Master-MCU (11) mit einem Master-Taktsignal verbunden ist und jede von einer Taktleitung des peripheren Verarbeitungs-Chips (13) und einer Taktleitung des peripheren Schnittstellen-Chips (12) mit einem Slave-Taktsignal verbunden ist, wobei das Slave-Taktsignal vom Master-Taktsignal unabhängig ist, so dass der periphere Schnittstellen-Chip (12) und der periphere Verarbeitungs-Chip (13) in einem normalen Arbeitszustand bleiben, wenn die Master-MCU (11) in einen Tiefschlafzustand übergeht, in dem der Master-Taktgeber nicht mehr funktioniert, wobei der pheriphere Schnittstellen-Chip (12) und der periphere Verarbeitungs-Chip (13), wenn zum Bleiben in einem normalen Arbeitszustand konfiguriert, Daten über Speicherdirektzugriff (Direct Memory Access - DMA) zwischen dem peripheren Verarbeitungs-Chip (13) und dem peripheren Schnittstellen-Chip (12) übertragen; und
der periphere Schnittstellen-Chip (12) konfiguriert ist zum Überwachen einer Datenmenge von durch den peripheren Verarbeitungs-Chip (13) an den peripheren Schnittstellen-Chip (12) gesendeten Daten und zum Senden eines Aufwecksignals an die Master-MCU (11), falls die Datenmenge einen Schwellenwert übersteigt.

2. Schaltung nach Anspruch 1, wobei das Senden eines Aufwecksignals durch den peripheren Schnittstellen-Chip (12) an die Master-MCU (11) Folgendes umfasst:
Senden des Aufwecksignals in Form eines Unterbrechungssignals an die Master-MCU (11) durch den pheripheren Schnittstellen-Chip (12).

3. Schaltung nach einem der vorhergehenden Ansprüche, wobei der periphere Schnittstellen-Chip (12) eine Universal Asynchronous Receiver Transmitter- (UART) -Einheit, eine Serial Peripheral Interface- (SPI) -Einheit, eine Inter-Integrated Circuit-Bus- (12C) -Einheit oder eine Bluetooth-Einheit ist; und
der pheriphere Verarbeitungs-Chip (13) eine Analog/Digital-(A/D) -Einheit, eine Pulsweitenmodulations- (PWM) -einheit, eine Videoverarbeitungseinheit oder eine Audioverarbeitungseinheit ist.

4. Verfahren zum Aufwecken einer Master-MikrocontrollerEinheit (MCU) (11), die in einer Vorrichtung angewendet wird, die eine Master-MCU (11), einen peripheren Schnittstellen-Chip (12) und einen peripheren Verarbeitungs-Chip (13) umfasst, und umfassend:
Konfigurieren der Master-MCU (11), so dass sie in einem Tiefschlafzustand ist, und Konfigurieren des peripheren Schnittstellen-Chips (12) und des peripheren Verarbeitungs-Chips (13), so dass sie in einem normalen Arbeitszustand sind, umfassend: Übertragen von Daten zwischen dem peripheren Verarbeitungs-Chip (13) und dem peripheren Schnittstellen-Chip (12) über Speicherdirektzugriff (Direct Memory Access - DMA);
Überwachen einer Datenmenge von durch den peripheren Verarbeitungs-Chip (13) an den peripheren Schnittstellen-Chip (12) gesendeten Daten und,
falls die Datenmenge einen Schwellenwert übersteigt, Senden eines Aufwecksignals an die Master-MCU (11);
wobei das Konfigurieren der Master-MCU (11), so dass sie in einem Tiefschlafzustand ist, und das Konfigurieren des peripheren Schnittstellen-Chips (12) und des peripheren Verarbeitungs-Chips (13), so dass sie in einem normalen Arbeitszustand sind, Folgendes umfasst:
Verbinden einer Taktleitung der Master-MCU (11) mit einem Master-Taktsignal;
Verbinden von jeder einer Taktleitung des peripheren Verarbeitungs-Chips (13) und einer Taktleitung des peripheren Schnittstellen-Chips (12) mit einem Slave-Taktsignal, wobei das Slave-Taktsignal vom Master-Taktsignal unabhängig ist; und
Steuern des Master-Taktsignals und des Slave-Taktsignals, um die Master-MCU (11) so zu konfigurieren, dass sie im Tiefschlafzustand ist, in welchem der Master-Taktgeber nicht mehr funktioniert, und um den peripheren Verarbeitungs-Chip (13) und den peripheren Schnittstellen-Chip (12) so zu konfigurieren, dass sie im normalen Arbeitszustand sind.

5. Verfahren nach Anspruch 5, wobei das Senden eines Aufwecksignals an die Master-MCU (11) Folgendes umfasst:
Senden des Aufwecksignals in Form eines Unterbrechungssignals an die Master-MCU (11).

6. Verfahren nach Anspruch 4 oder Anspruch 5, wobei
der periphere Schnittstellen-Chip (12) eine Universal Asynchronous Receiver Transmitter- (UART) -Einheit, eine Serial Peripheral Interface- (SPI) -Einheit, eine Inter-Integrated Circuit-Bus- (12C) -Einheit oder eine Bluetooth-Einheit ist; und
der periphere Verarbeitungs-Chip (13) eine Analog/Digital-(A/D) -Einheit, eine Pulsweitenmodulations- (PWM) -einheit, eine Videoverarbeitungseinheit oder eine Audioverarbeitungseinheit ist.

## Revendications

1. Circuit de réveil d'une unité de microcontrôleur maîtresse MCU (11), comprenant la MCU maîtresse (11), une puce d'interface périphérique (12), et une puce de traitement périphérique (13), dans lequel
la puce de traitement périphérique (13) est connectée à la MCU maîtresse (11) par l'intermédiaire de la puce d'interface périphérique (12) ;
une ligne d'horloge de la MCU maîtresse (11) est connectée à un signal d'horloge maîtresse, et chacune d'une ligne d'horloge de la puce de traitement périphérique (13) et d'une ligne d'horloge de la puce d'interface périphérique (12) est connectée à un signal d'horloge esclave, le signal d'horloge esclave étant indépendant du signal d'horloge maîtresse, de telle sorte que la puce d'interface périphérique (12) et la puce de traitement périphérique (13) restent dans un état de fonctionnement normal quand la MCU maîtresse (11) entre dans un état de sommeil profond dans lequel l'horloge maîtresse arrête de fonctionner dans lequel la puce d'interface périphérique (12) et la puce de traitement périphérique (13) lorsqu'elles sont configurées pour rester dans un état de fonctionnement normal transmettent des données entre la puce de traitement périphérique (13) et la puce d'interface périphérique (12) par accès direct à la mémoire DMA ; et
la puce d'interface périphérique (12) est configurée pour contrôler une quantité de données envoyée par la puce de traitement périphérique (13) à la puce d'interface périphérique (12), et envoyer un signal de réveil à la MCU maîtresse (11) si la quantité de données dépasse un seuil.

2. Circuit selon la revendication 1, dans lequel l'envoi par la puce d'interface périphérique (12) d'un signal de réveil à la MCU maîtresse (11) comprend :
l'envoi par la puce d'interface périphérique (12) du signal de réveil sous forme de signal d'interruption à la MCU maîtresse (11).

3. Circuit selon l'une quelconque des revendications précédentes, dans lequel la puce d'interface périphérique (12) est une unité d'émetteur-récepteur universel asynchrone UART, une unité d'interface périphérique sérielle SPI, une unité de bus inter-circuits intégrés IEC, ou un unité Bluetooth ; et
la puce de traitement périphérique (13) est une unité analogique/numérique A/D, une unité de modulation de largeur d'impulsion PWM, une unité de traitement vidéo, ou une unité de traitement audio.

4. Procédé de réveil d'une unité de microcontrôleur maîtresse MCU (11) appliqué dans un appareil comprenant la MCU maîtresse (11), une puce d'interface périphérique (12), et une puce de traitement périphérique (13), et comprenant :
la configuration de la MCU maîtresse (11) pour qu'elle soit dans un état de sommeil profond, et la configuration de la puce d'interface périphérique (12) et de la puce de traitement périphérique (13) pour qu'elles soient dans un état de fonctionnement normal comprenant : la transmission de données entre la puce de traitement périphérique (13) et la puce d'interface périphérique (12) par accès direct à la mémoire DMA ;
le contrôle d'une quantité de données envoyée par la puce de traitement périphérique (13) à la puce d'interface périphérique (12) ; et
dans lequel la configuration de la MCU maîtresse (11) pour qu'elle soit dans un état de sommeil profond et la configuration de la puce d'interface périphérique (12) et de la puce de traitement périphérique (13) pour qu'elles soient dans un état de fonctionnement normal comprend :
la connexion d'une ligne d'horloge de la MCU maîtresse (11) à un signal d'horloge maîtresse ;
la connexion de chacune d'une ligne d'horloge de la puce de traitement périphérique (13) et d'une ligne d'horloge de la puce d'interface périphérique (12) à un signal d'horloge esclave, le signal d'horloge esclave étant indépendant du signal d'horloge maîtresse ; et
la commande du signal d'horloge maîtresse et du signal d'horloge esclave, de manière à configurer la MCU maîtresse (11) pour qu'elle soit dans l'état de sommeil profond dans lequel l'horloge maîtresse arrête de fonctionner et à configurer la puce de traitement périphérique (13) et la puce d'interface périphérique (12) pour qu'elles soient dans l'état de fonctionnement normal.

5. Procédé selon la revendication 5, dans lequel l'envoi d'un signal de réveil à la MCU maîtresse (11) comprend :
l'envoi du signal de réveil sous forme de signal d'interruption à la MCU maîtresse (11).

6. Procédé selon la revendication 4 ou la revendication 5, dans lequel
la puce d'interface périphérique (12) est une unité d'émetteur-récepteur universel asynchrone UART, une unité d'interface périphérique sérielle SPI, une unité de bus inter-circuits intégrés IEC, ou un unité Bluetooth ; et
la puce de traitement périphérique (13) est une unité analogique/numérique A/D, une unité de modulation de largeur d'impulsion PWM, une unité de traitement vidéo, ou une unité de traitement audio.
